# EUROPEAN PATENT SPECIFICATION

(11) **EP 3 763 215 B1**
(45) Date of publication and mention of the grant of the patent: **12.01.2022**
(21) Application number: 20183766.3
(22) Date of filing: 02.07.2020
(51) Int. Cl.: A21B 3/04, F24C 15/32

(54) **ELECTRIC OVEN WITH STEAM FOR FOOD**
ELEKTRISCHER DAMPFOFEN
FOUR ÉLECTRIQUE À VAPEUR

(30) Priority: 11.07.2019 IT 201900011499
(43) Date of publication of application: 13.01.2021
(73) Proprietor: Moretti Forni S.p.A., 61037 Mondolfo (PU) (IT)
(72) Inventor: MORETTI, Mario, 61121 PESARO (PU) (IT)
(74) Representative: Ripamonti, Enrico

(56) References cited:
- EP-A1- 1 662 205
- EP-A1- 3 207 801
- WO-A2-2013/190367
- US-A1- 2006 000 821
- US-A1- 2006 278 630
- US-B1- 6 323 464

## Description

The present invention relates to an electric oven with steam for food.

More in particular, the present invention relates to an electric oven for cooking food with the steam technique and, more specifically, with the use of wet steam.

As known, with particular reference to electric ovens for food use, the means for heating the oven are located in the cooking surface of the cooking chamber, under or inside the cooktop (or bedplate) and on the vault (or roof) of the cooking chamber.

The cooking surface is typically but not exclusively made of completely or partially refractory material which allows to maintain a right cooking temperature and to spread the heat in the most uniform manner possible.

The heating means (consisting of electric resistors) are positioned inside the cooking surface which constitutes the bedplate and they are also positioned on the roof of the cooking chamber; said heating means can be, for example and in the case of the cooking surface or bedplate, housed in cavities formed in the thickness of the cooking surface or bedplate, along a horizontal plane and parallel to each other or, according to known alternative embodiments, they can also be positioned below said cavities; similarly, the arrangement of the heating means on the roof of the cooking chamber can also be provided for in a known manner. Besides the heat generated by the aforementioned heating means, some types of food cooking ovens also use steam (generated by means of a boiler which heats the water drawn from a tank or from the water mains and vaporises it inside the cooking chamber).

The steam used for the aforementioned cooking is generated by a thermal shock that occurs when the water comes into contact with hot elements (or a mass) of the boiler.

Such a type of steam cooking has some advantages linked to the ability to keep the nutritional and organoleptic properties of the foods intact, as well as ensuring the stability of the flavours and the maintenance of softness and juiciness of the foods being cooked and, in addition, it allows a faster cooking of the dishes with a better cooking quality (for example, absence of crust formation on the bread being baked or, in any case, a considerable reduction in the thickness thereof and a slowing of chemical reactions responsible for the formation of melanoids and the caramelisation of sugars).

For these reasons, ovens that use cooking with steam become important for traditional cooking such as vegetables, fish or meat and the like, as well as in the case of the bakery in which the maximum temperatures reach values comprised between 200°C and 250°C.

It is known that the optimal steam for the cooking mode described above is a steam generated at atmospheric pressure and that is known as "wet steam".

However, traditional steam cooking systems are often subject to problems linked to the fact that, once the steam has been generated, the hot mass (which allows the generation of said steam) tends to lose temperature and, consequently, tends to lose part of its effectiveness; this means that, in order to proceed with a subsequent blowing of steam, a waiting time defined as "refractory time" is required (therefore, there is an expansion of the times which, besides entailing a higher energy consumption, also leads to an increase in the related costs).

Reinforced resistive systems with very high resistive loads can be used to solve this problem. However, they do not guarantee environmental sustainability and energy saving. Other known technical solutions entail the use of pressurised systems, i.e. boilers which, however, have the drawback of generating dry steam which confers poor quality to the cooked product.

Known technical solutions having the aforementioned drawbacks are, for example, disclosed in US2006/0000821 which illustrates a steam oven comprising a steam generator provided with an evaporation element for generating steam to be introduced into the cooking chamber and a fluid reservoir for supplying fluid to said steam generator and ensure a fluid level in said generator suitable to allow a complete immersion of the evaporation element and with said steam generator in communication with a controller suitable to activate/deactivate the evaporation element and to allow the maintenance of a desired temperature for the water. Another technical solution for a steam oven and, more particularly, for a combined steam oven, is described in WO2013/190367 which refers to a type of oven in which the fluid supply and fluid discharge ducts are integrated in the heat exchanger of the oven with the fluid supply duct at contact with the fluid discharge ducts in a manner sufficient to allow heat transfer between the discharge duct and the loading duct, and this in order to achieve an energy saving in heating the fluid to the temperature suitable for cooking the food. Another solution for steam cooker is disclosed in EP1662205 as comprising a cooking chamber a steam generator and a top blowhole provided on the top part of the cooking chamber from which the steam is supplied from the steam generator and blown from the top to the bottom of the cooking chamber. Still another known solution is disclosed in EP3207801 as a steam cooker comprising control means and/or control means and/or means for programming the cooking of the products to be cooked, coupled and/or interacting and/or controlling the controlled means for conveying the liquid from a reservoir to the enclosure and/or the means for heating the liquid in the reservoir and/or the means for vaporizing the liquid in the enclosure and/or possibly the means for conveying the liquid from the liquid source to the reservoir.

All the known technical solutions illustrated above also amplify the aforementioned problems should there arise the need to cook with steam at higher temperature regimes than those previously considered and, more particularly, in the case of temperature regimes comprised between 350°C and 400°C which are the typical pizza making temperatures. More specifically, at these temperature regimes there are also problems linked to the cooking times which, in the case of pizza, tend to be much lower than those characterising the making of bakery products (about 3 or 4 minutes for making pizzas with the 20 or 30 minutes that characterise the baking industry), as well as problems linked to the need for refractory times much lower than those that characterise the making of bakery products.

A further drawback which particularly characterises the pizza making industry is represented by the fact that ovens especially suitable for making pizza have cooking chambers in which the distance between bedplate(or cooktop) and roof (or vault) is less than the distance that characterises the ovens used for the baking industry (14-18 cm, compared to the 25-30 cm of the baking industry) and this leads to a lower possibility of the steam becoming effective, thus the cooking requires greater amount of steam, with a consequent greater consumption of energy and related costs.

An object of the present invention is to provide an electric oven for food suitable to overcome the aforementioned problems.

More in particular, the object of the present invention is to provide an electric oven for cooking food with steam and, more specifically, with wet steam, with a guarantee of always having a supply of wet steam in the cooking chamber. A further object of the present invention is to allow an optimal use of steaming, with an optimisation of cooking, also at temperature regimes typical for making pizza and the like, i.e. a temperature range comprised between 350° and 400°C.

A further object of the present invention is to provide an electric oven for food which allows an increase in the cooking speed with a related energy saving.

A further object of the present invention is to provide the users with an electric oven with steam for food suitable to allow a high level of reliability and duration over time and, in addition, such to be easy and cost-effective to manufacture.

These and other objects are attained by the invention having the characteristics according to claim 1.

According to the invention, herein provided is an electric oven with steam for food, for cooking food of the pizza type and the like, comprising an oven body and a base optionally provided with wheels, the oven body comprising a cooking chamber provided with an oven mouth closed by an openable door, the cooking chamber comprising a floor or bedplate of the oven and a cooking vault or roof opposite to said floor of the oven and with said cooktop and cooking vault respectively housing floor resistors and vault resistors required for heating the cooking chamber of the oven, said oven comprising wet steam generation means inside the cooking chamber and means for detecting operating parameters of the steam generation means and of the oven cooperating in an adaptive process logic with a central processing unit comprising a control unit for a quantification of the steam to be introduced into the cooking chamber.

Advantageous embodiments of the invention are outlined by the dependent claims.

The construction and functional characteristics of the electric oven with steam for food of the present invention, will be clearer from the following detailed description in which reference is made to the attached drawings representing an embodiment exclusively provided by way of example and wherein;

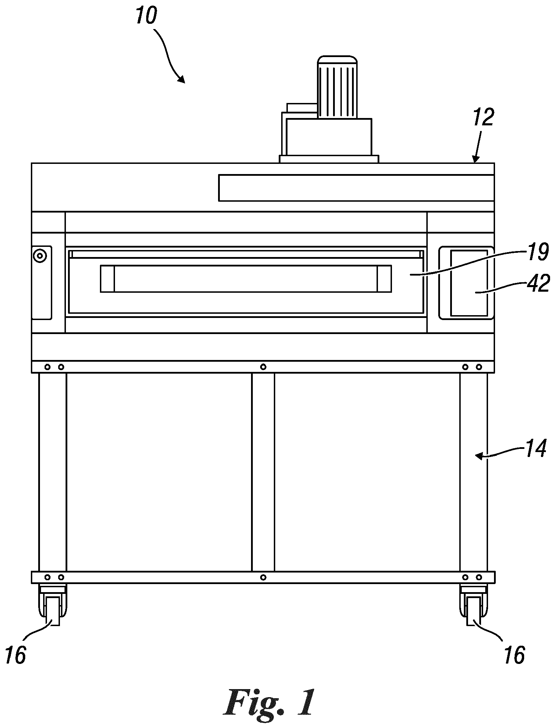

figure 1 is a schematic front view of the electric food oven with steam cooking of the present invention;

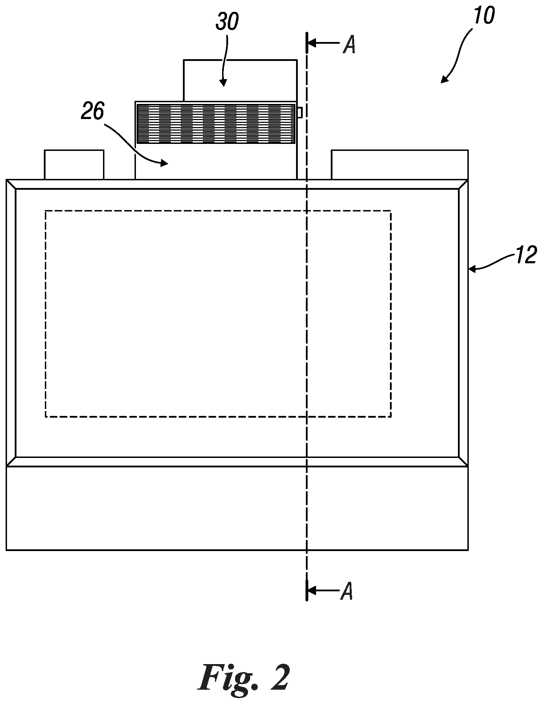

figure 2 is a schematic top view of the electric oven;
figure 3 is a schematic cross-sectional view according to a plane A-A of figure 2, of the electric oven of the invention;
figure 4 schematically shows a component of the electric oven of the invention.

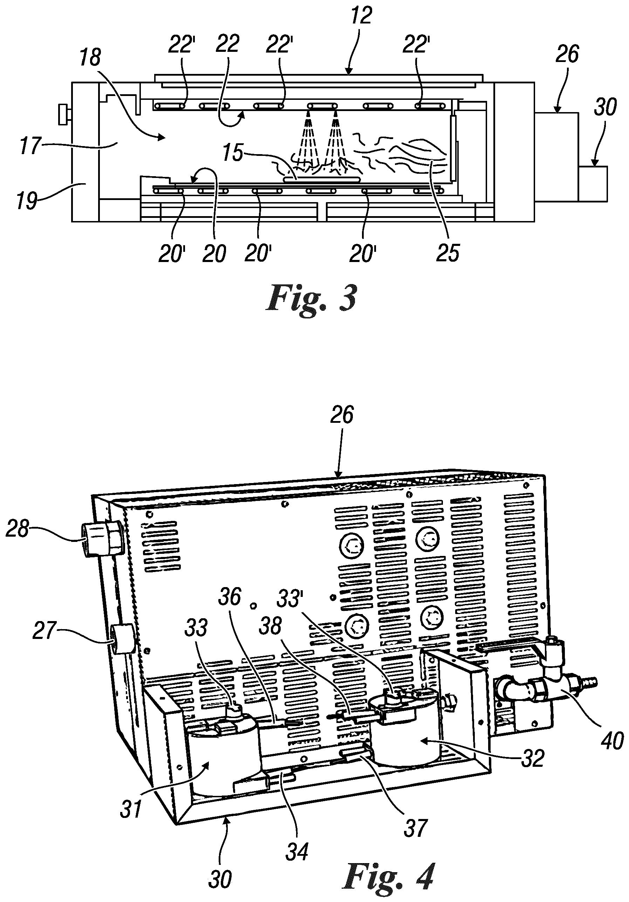

With reference to the aforementioned figures, the electric oven with steam for food, schematically indicated with 10 in the figures, comprises (in an exemplifying embodiment) an oven body 12 and a base 14 optionally provided with wheels 16 for easy movement of the oven 10, with the oven body 12 comprising a cooking chamber 18 provided with an oven mouth 17 closed by an openable door 19, the cooking chamber 18 comprising a floor 20 of the oven and a cooking vault 22 opposite to said floor of the oven and with said cooktop 20 and cooking vault 22 which house resistors (the resistors of the cooktop indicated with 20' and the resistors of the cooking vault indicated with 22') required to heat the cooking chamber 18 of the oven; the floor 20 of the oven constitutes what is referred to in technical jargon as "bedplate" and it defines the resting surface for the food being cooked (for example a pizza 15, as schematically shown in figure 3), while the cooking vault 22 constitutes what is referred to in technical jargon as "roof".

The cooking chamber 18 of the oven of the invention has a distance between the cooktop 20 (or bedplate) and the cooking vault 22 (or roof) which substantially corresponds to the distance that characterises the ovens for the baking industry (i.e. 25-30 cm).

Considering that the electric oven of the invention is a steam oven, the cooking chamber 18 comprises mouths or nozzles 25 for the exit of steam "V" (as indicated in figure 3), whose generation will be described in greater detail hereinafter.

The steam "V" is produced by means of a steamer 26 (not described in the technical and functional details since it is known) stabilised to the oven body 12 and connected to the mains water supply at an inlet 27 which allows the introduction of the mains water into the body of the steamer and, more specifically, in a sealed chamber (not shown) which is "fired" or heated by means of electrical resistors supplied by an electric power mains to which the steamer is connected by means of a terminal or cable gland 28; the steam is generated when the cold water coming from the mains water supply comes into contact with the walls of the sealed chamber of the steamer 26.

According to the technical solution according to the invention, the electric oven comprises a preheating device 30 stabilised to the steamer 26 and having the function of preheating the water coming from the mains water supply prior to its flow into the steamer 26.

The preheating device 30 comprises a pair of heaters (defined by a first heater 31 and a second heater 32) arranged in series and each provided with a thermal plug 33 and 33' respectively; the cold water coming from the mains water supply flows in from the inlet 27 of the steamer 26, arrives at a first duct 34 of the first heater 31 in which a first thermal gradient (Δthermal1) takes place and flows out from a second duct 36 of said first heater 31 to flow into a first duct 37 of the second heater 32 in which a second thermal gradient (Δthermal2) takes place and flow out from a second duct 38 of the second heater 32 from which this heated water is then conveyed to the steamer 26. In the preheating device (30), the water coming from the mains water supply undergoes a greater thermal gradient in the first heater 31 than in the second heater 32 ((Δthermal1)>(Δthermal2)).

At the end of the vaporisation cycle of the water, the amount of excess water is discharged by means of a tap 40 of the steamer 26.

The thermal plugs 33 and 33' of the preheating device 27 which are temperature sensors triangulate the data detected in the preheating device with the temperature data detected by a working thermostat (not shown in the figure) of the steamer 6 and with the temperature values detected by thermocouples (not shown in the figure) arranged in the cooking chamber 18 of the oven 12, with said sensors all independent from each other; this triangulation is achieved by means of a central unit 42 of the oven which interpolates the temperature data detected by the aforementioned sensors in order to define optimal working cases used for improving the cooking characteristics of the food in the oven and, more particularly, the interpolation is functional to obtain the right and optimal amount of steam "V".

The interpolation of the data detected by the aforementioned sensors is carried out in the control unit 42 of the oven 12 by means of a dedicated algorithm or processing program of the adaptive type.

In particular, the software of the control unit detects when and how much the thermal plugs 33 and 33' are working, how much and when the thermostat of the steamer 26 is working and interpolates them with the working conditions of the oven (the thermal conditions of the cooking chamber 18 detected by the thermocouples) so as to adjust the operation of the preheating device 27 by adjusting the switching ON or OFF of the heating resistors thereof (i.e. to anticipate the switching ON or OFF) or to adjust the switching ON or switching OFF of the steamer 26, so as to guarantee very low reset times and a steamer always ready as in optimal working conditions.

By modifying the working conditions, the values interpolated by the control unit as described above will change accordingly and, thus, the system will adapt to the new working conditions in order to guarantee unchanged output conditions.

The advantages attained by the electric steam oven of the present invention are observable in the light of the above. The electric steam oven of the present invention and, more specifically, the electric wet steam oven advantageously allows to have a greater cooking speed and with a guarantee that a supply of wet steam in the cooking chamber is always dispensed.

A further advantage of the electric oven of the present invention lies in the fact that wet steam is always available in the cooking chamber of the oven and this thanks to the presence of the preheating device that manages the temperature of the mains supply water conveyed to the steamer.

A further advantage lies in the fact that the device of the invention allows to map the various working conditions of the oven allowing the user to understand how much steam is being introduced into the cooking chamber in the various working conditions.

Further advantageous is the fact that the steam generated by means of the steamer according to the invention is interposed between the resistive loads (the roof or vault of the oven) and the product to be cooked (arranged on the bedplate of the oven), slowing down the formation of crust, reducing the thickness thereof and this so as to ensure that the product develops better during the cooking phase, i.e. it is characterised by a greater volume with respect to that which would characterise the cooking of the same food in an oven of the conventional type.

Further advantageous is the fact that the steam generated in the oven of the invention slows down the chemical reactions responsible for the colouring of the crust and reduces the irradiation of the resistors of the roof of the cooking chamber, obtaining surfaces of the food being cooked which are less dark, more homogeneous and, consequently, healthier.

Further advantageous is the fact that the steam oven of the invention, considering the fact that it allows to eliminate the variable of the temperature of the mains water and, thus, to have a more stable heating situation, allows to increase the cooking speed of the dishes or food and, consequently, it allows to achieve energy saving; in fact, the presence of wet steam between the roof and the bedplate of the oven cooking chamber increases the convective thermal conductivity of the heat-transmitting fluid (fluid in this case defined by the steam particles present in the cooking chamber).

A further advantage lies in the fact that in the oven according to the invention, by interpolating the values of the parameters detected by the thermocouples of the cooking chamber, by the working thermostat of the steamer and by the thermal tablets of the preheating device, the control unit allows to adaptively adjust the working conditions of the oven in order to always have wet steam in the right and optimal conditions and, thus, it allows to improve the cooking of the product (elimination of the variable linked to the temperature value of the mains water.

Further advantageous is the fact that in the oven of the invention the distance between the cooktop 20 (or bedplate) and the cooking vault 22 (or roof) corresponds to the distance that characterises the ovens for the baking industry (i.e. 25-30 cm) and this ensures the availability of a more effective steam, with a containment of the energy consumption and, thus, a reduction of costs.

Though the invention has been described above with particular reference to an embodiment thereof provided solely by way of non-limiting example, numerous modifications and variants shall be clear to a man skilled in the art in the light of the description above. The scope of protection is however defined by the claims that follow.

## Claims

1. An electric oven (10) with steam for food, for cooking food of the pizza type and the like, comprising an oven body (12) and a base (14) possibly provided with wheels (16), the oven body (12) comprising a cooking chamber (18) provided with an oven mouth (17) closed by an openable door (19), the cooking chamber (18) comprising a floor (20) or bedplate of the oven and a cooking vault (22) or roof opposite to said floor of the oven and with said floor (20) and cooking vault (22) respectively housing floor resistors (20') and vault resistors (22') required for heating the cooking chamber (18) of the oven, said oven **characterised in that** it comprises means for generating wet steam inside the cooking chamber (18) cooperating with means for adjusting thermal parameters of the water managed by the steam generation means and means for detecting operating parameters of the steam generation means, of the detection means and of the oven cooperating in an adaptive process logic with a central processing unit comprising a control unit (42) for quantifying the steam to be introduced into the cooking chamber (18), said means for adjusting the thermal parameters comprising a preheating device (30) stabilised to a steamer (26) for preheating the water coming from a mains water supply prior to it flowing into the steamer (26) and comprising a pair of heaters defined by a first heater (31) and by a second heater (32) arranged in series, the first heater (31) being functional to obtain a first thermal gradient (Δthermal1) for the cold water coming from the mains water supply and the second heater (32) being functional to obtain a second thermal gradient (Δthermal2) for the water flowing out from the first heater and flowing into said second heater, with the first thermal gradient being greater than the second thermal gradient((Δthermal1)>(Δthermal2)).

2. The electric oven according to claim 1, **characterised in that** the steamer (26) is stabilised to the oven body (12) and it is suitable to introduce steam into the cooking chamber (18) through mouths or nozzles (25) of the cooking chamber, said steamer being connected to the mains water supply by means of an inlet (27) and comprising electrical resistors supplied by an electric power mains to which the steamer is connected by means of a terminal or cable gland (28).

3. The oven according to claim 1, **characterised in that** the first heater (31) comprises a first duct (34) and a second duct (36), the second heater (32) comprising a first duct (37) and a second duct (38), said first duct (34) of the first heater (31) into which the cold water coming from the mains water supply and flowing in from the inlet (27) of the steamer (26) flows, and said second duct (36) from which water which flows into the first duct (37) of the second heater (32) flows out from the second duct (38) and flows into the steamer (26).

4. The oven according to claim 1, **characterised in that** the preheating device (30) comprises temperature sensors applied to the first heater (31) and to the second heater (32) and defined by thermal plugs (33, 33').

5. The oven according to claim 1, **characterised in that** it comprises thermocouples arranged in the cooking chamber (18).

6. The oven according to claim 1 or 2, **characterised in that** the steamer (26) comprises a working thermostat.

7. The oven according to claims 4 to 6, **characterised in that** the thermal plugs of the preheating device (30), the thermocouples of the cooking chamber (18) and the working thermostat of the steamer (26) are mutually independent.

8. The oven according to claim 7, **characterised in that** the control unit (42) triangulates the data detected by the sensors of the preheating device (30), of the cooking chamber (18) and of the steamer (26) and interpolates them to control the switching ON/OFF of the first (31) and second (32) heater of the preheating device (30) or to control the switching ON/OFF of the steamer (26).

## Patentansprüche

1. Elektrischer Backofen (10) mit Dampf für Lebenseinrichtungen, zum Garen von Lebensmittel vom Typ Pizza und dergleichen, umfassend einen Ofenkörper (12) und einem Sockel (14), der möglicherweise mit Rädern (16) versehen ist, der Ofenkörper (12) umfassend eine Garkammer (18), die mit einer Ofenöffnung (17) versehen ist, die durch eine zu öffnende Tür (19) geschlossen ist, die Garkammer (18) umfassend einen Boden (20) oder eine Grundplatte des Backofens und ein Gargewölbe (22) oder ein dem Boden des Backofens gegenüberliegendes Dach und wobei der Boden (20) und das Gargewölbe (22) jeweils Bodenwiderstände (20') und Gewölbewiderstände (22') aufnehmen, die für die Beheizung der Garkammer (18) des Backofens erforderlich sind, wobei der Backofen **dadurch gekennzeichnet ist, dass** er Einrichtungen zum Erzeugen von Nassdampf im Inneren der Garkammer (18) umfasst, die mit Einrichtungen zum Einstellen thermischer Parameter des von den Dampfgarerzeugungseinrichtungen verwalteten Wassers und mit Einrichtungen zum Erfassen von Betriebsparametern der Dampfgarerzeugungseinrichtungen, der Erfassungseinrichtungen und des Backofens zusammenwirken, indem sie in einer adaptiven Prozesslogik mit einer zentralen Verarbeitungseinheit zusammenwirken, umfassend eine Steuereinheit (42) zum Quantifizierung des in die Garkammer (18) einzuleitenden Dampfs, die Einrichtungen zum Einstellen der thermischen Parameter umfassend eine Vorheizvorrichtung (30), die an einem Dampfgarer (26) stabilisiert ist, um das von einer Leitungswasserversorgung kommende Wasser vorzuheizen, bevor es in den Dampfgarer (26) fließt, und umfassend ein Paar von Heizelementen, die durch einen erstes Heizelement (31) und ein zweites Heizelement (32) definiert sind, die in Reihe angeordnet sind, wobei das erste Heizelement (31) funktionsfähig ist, um einen ersten thermischen Gradienten (Δthermal1) für das aus der Leitungswasserversorgung kommende kalte Wasser zu erlangen, und das zweite Heizelement (32) dazu dient, einen zweiten thermischen Gradienten (Δthermal2) für das aus dem ersten Heizelement austretende und in das zweite Heizelement fließende Wasser zu erlangen, wobei der erste thermische Gradient größer ist als der zweite thermische Gradient ((Δthermal1)>(Δthermal2)).

2. Elektrischer Backofen nach Anspruch 1, **dadurch gekennzeichnet, dass** der Dampfgarer (26) an dem Ofenkörper (12) stabilisiert ist und geeignet ist, Dampf durch Mündungen oder Düsen (25) der Garkammer in die Garkammer (18) einzuleiten, wobei der Dampfgarer über einen Einlass (27) mit der Leitungswasserversorgung verbunden ist und elektrische Widerstände umfasst, die von einem Stromnetz gespeist werden, mit dem der Dampfgarer über eine Klemme oder eine Kabelverschraubung (28) verbunden ist.

3. Backofen nach Anspruch 1, **dadurch gekennzeichnet, dass** das erste Heizelement (31) eine erste Leitung (34) und eine zweite Leitung (36) umfasst, das zweite Heizelement (32) umfassend eine erste Leitung (37) und eine zweite Leitung (38), wobei die erste Leitung (34) des ersten Heizelements (31), in die das kalte Wasser fließt, das von der Leitungswasserversorgung kommt und von dem Einlass (27) des Dampfgarers (26) einströmt, und die zweite Leitung (36), aus der Wasser, das in der ersten Leitung (37) des zweiten Heizelements (32) fließt, aus der zweiten Leitung (38) fließt und in den Dampfgarer (26) fließt.

4. Backofen nach Anspruch 1, **dadurch gekennzeichnet, dass** die Vorheizvorrichtung (27) Temperatursensoren umfasst, die auf das erste Heizelement (31) und auf das zweite Heizelement (32) angewendet und durch thermische Stopfen (33, 33') definiert sind.

5. Backofen nach Anspruch 1, **dadurch gekennzeichnet, dass** er Thermoelemente umfasst, die in der Garkammer (18) angeordnet sind.

6. Backofen nach Anspruch 1 oder 2, **dadurch gekennzeichnet, dass** der Dampfgarer (26) einen Arbeitsthermostat umfasst.

7. Backofen nach einem der Ansprüche 4 bis 6, **dadurch gekennzeichnet, dass** die thermischen Stopfen der Vorheizvorrichtung (30), die Thermoelemente der Garkammer (18) und der Arbeitsthermostat des Dampfgarers (26) voneinander unabhängig sind.

8. Backofen nach Anspruch 7, **dadurch gekennzeichnet, dass** die Steuereinheit (42) die von den Sensoren der Vorheizvorrichtung (30), der Garkammer (18) und des Dampfgarers (26) erfassten Daten trianguliert und interpoliert, um das Ein- und Ausschalten des ersten (31) und zweiten (32) Heizelements der Vorheizvorrichtung (30) oder das Ein- und Ausschalten des Dampfgarers (26) zu steuern.

## Revendications

1. Four électrique (10) à vapeur pour aliments, destiné à la cuisson d'aliments du type pizza et similaires, comprenant un corps de four (12) et une base (14) éventuellement pourvue de roues (16), le corps de four (12) comprenant une chambre de cuisson (18) pourvue d'une bouche de four (17) fermée par une porte ouvrable (19), la chambre de cuisson (18) comprenant un plancher (20) ou plaque de base du four et une voûte de cuisson (22) ou toit opposé audit plancher du four et avec ledit plancher (20) et ladite voûte de cuisson (22) logeant respectivement des résistances de plancher (20') et des résistances de voûte (22') nécessaires pour chauffer la chambre de cuisson (18) du four, ledit four étant **caractérisé en ce qu'**il comprend des moyens permettant de générer de la vapeur humide à l'intérieur de la chambre de cuisson (18) coopérant avec des moyens afin d'ajuster les paramètres thermiques de l'eau gérée par les moyens de génération de vapeur et des moyens de détection des paramètres de fonctionnement des moyens de génération de vapeur, des moyens de détection et du four coopérant dans une logique de processus adaptatif avec une unité centrale de traitement comprenant une unité de commande (42) permettant de quantifier la vapeur à introduire dans la chambre de cuisson (18), lesdits moyens de réglage des paramètres thermiques comprenant un dispositif de préchauffage (30) stabilisé à un cuiseur à vapeur (26) permettant de préchauffer l'eau provenant d'une alimentation en eau du réseau avant qu'elle ne s'écoule dans le cuiseur à vapeur (26) et comprenant une paire d'éléments chauffants définis par un premier élément chauffant (31) et par un deuxième élément chauffant (32) disposés en série, le premier élément chauffant (31) étant fonctionnel pour obtenir un premier gradient thermique (Δthermal1) pour l'eau froide provenant de l'alimentation en eau du réseau et le deuxième élément chauffant (32) étant fonctionnel pour obtenir un deuxième gradient thermique (Δthermal2) pour l'eau sortant du premier élément chauffant et entrant dans ledit deuxième élément chauffant, le premier gradient thermique étant supérieur au deuxième gradient thermique ((Δthermal1)>(Δthermal2)).

2. Four électrique selon la revendication 1, **caractérisé en ce que** le vaporisateur (26) est stabilisé sur le corps de four (12) et est adapté pour introduire de la vapeur dans la chambre de cuisson (18) à travers des bouches ou des buses (25) de la chambre de cuisson, ledit vaporisateur étant connecté à l'alimentation en eau du réseau au moyen d'une entrée (27) et comprenant des résistances électriques alimentées par un réseau électrique auquel le vaporisateur est connecté au moyen d'une borne ou d'un presse-étoupe (28).

3. Four selon la revendication 1, **caractérisé en ce que** le premier élément chauffant (31) comprend un premier conduit (34) et un deuxième conduit (36), le deuxième élément chauffant (32) comprenant un premier conduit (37) et un deuxième conduit (38), ledit premier conduit (34) du premier élément chauffant (31) dans lequel l'eau froide provenant de l'alimentation en eau du réseau et entrant par l'entrée (27) du four à vapeur (26) s'écoule, et ledit deuxième conduit (36) à partir duquel l'eau qui s'écoule dans le premier conduit (37) du deuxième élément chauffant (32) s'écoule hors du deuxième conduit (38) et s'écoule dans le four à vapeur (26).

4. Four selon la revendication 1, **caractérisé en ce que** le dispositif de préchauffage (30) comprend des capteurs de température appliqués au premier élément chauffant (31) et au deuxième élément chauffant (32) et définis par des bouchons thermiques (33, 33').

5. Four selon la revendication 1, **caractérisé en ce qu'**il comprend des thermocouples disposés dans la chambre de cuisson (18).

6. Four selon la revendication 1 ou 2, **caractérisé en ce que** le vaporisateur (26) comprend un thermostat de travail.

7. Four selon les revendications 4 à 6, **caractérisé en ce que** les bouchons thermiques du dispositif de préchauffage (30), les thermocouples de la chambre de cuisson (18) et le thermostat de travail du cuiseur à vapeur (26) sont mutuellement indépendants.

8. Four selon la revendication 7, **caractérisé en ce que** l'unité de commande (42) triangule les données détectées par les capteurs du dispositif de préchauffage (30), de la chambre de cuisson (18) et du cuiseur à vapeur (26) et les interpole pour commander la mise en marche/arrêt du premier (31) et du deuxième (32) élément chauffant du dispositif de préchauffage (30) ou pour commander la mise en marche/arrêt du cuiseur à vapeur (26).
